# FASCICULE DE BREVET EUROPEEN

(11) **EP 1 082 624 B1**
(45) Date de publication et mention de la délivrance du brevet: **10.02.2016**
(21) Numéro de dépôt: 00905123.6
(22) Date de dépôt: 14.02.2000
(51) Int. Cl.: G02B 1/10, C08J 7/04, C09D 151/00

(54) **LENTILLE OPHTALMIQUE EN VERRE ORGANIQUE, COMPORTANT UNE COUCHE DE PRIMAIRE ANTICHOCS**
OPTHALMISCHE LINSE AUS ORGANISCHEM GLAS MIT EINER SCHLAGFESTEN GRUNDIERUNGSSCHICHT
OPTHALMIC LENS MADE OF ORGANIC GLASS, COMPRISING AN ANTI-SHOCK PRIMER COAT

(30) Priorité: 26.02.1999 FR 9902438
(43) Date de publication de la demande: 14.03.2001
(73) Titulaire: ESSILOR INTERNATIONAL COMPAGNIE GENERALE D'OPTIQUE, 94227 Charenton Cédex (FR)
(72) Inventeur: FAVEROLLE, Francine, Sturbridge, MA 01566 (US); CANO, Jean-Paul, F-94430 Chennevières-sur-Marne (FR); WAJS, Georges, F-94200 Ivry-sur-Seine (FR)
(74) Mandataire: Catherine, Alain
(86) Numéro de dépôt international: PCT/FR2000/000353
(87) Numéro de publication internationale: WO 2000/050928

(56) Documents cités:
- EP-A- 0 609 756
- EP-A- 0 842 991
- WO-A-94/25499
- WO-A1-00/08493
- WO-A1-99/26089
- US-A- 5 316 791
- PATENT ABSTRACTS OF JAPAN vol. 1995, no. 06, 31 juillet 1995 (1995-07-31) & JP 07 070255 A (TAKEDA CHEM IND LTD), 14 mars 1995 (1995-03-14) & DATABASE WPI/DERWENT [Online] an 1995-144890,
- PATENT ABSTRACTS OF JAPAN vol. 1999, no. 01, 29 janvier 1999 (1999-01-29) & JP 10 282306 A (FUJI PHOTO FILM CO LTD), 23 octobre 1998 (1998-10-23)

## Description

L'invention concerne, d'une manière générale, une lentille ophtalmique en verre organique, comprenant sur au moins une de ses faces une couche de primaire antichocs constituée par un agrégat de particules au moins biphasiques et en particulier un agrégat de particules polymériques ayant une structure coeur/écorce.

Il est bien connu que les lentilles ophtalmiques en verre organique sont plus sensibles à la rayure et à l'abrasion que les lentilles en verre minéral.

De ce fait, il est de pratique courante de protéger en surface des lentilles en verre organique au moyen de revêtement dur (anti-abrasion), en particulier un revêtement à base de polysiloxane.

D'autre part, il est également connu de traiter des lentilles en verre organique de manière à empêcher la formation de reflets parasites gênants pour le porteur de la lentille et ses interlocuteurs. Ainsi, il est classique de pourvoir des lentilles en verre organique d'un revêtement anti-reflets mono- ou multicouche, généralement en matière minérale.

Toutefois, lorsque la lentille comporte dans sa structure un revêtement dur anti-abrasion et éventuellement un revêtement anti-reflets déposé sur la surface du revêtement dur anti-abrasion, la présence de ces revêtements diminue la résistance aux chocs de la lentille ophtalmique finale, en rigidifiant le système qui devient alors cassant.

Pour remédier à cet inconvénient, on a déjà proposé de disposer entre la lentille en verre organique et le revêtement dur anti-abrasion, une couche de primaire anti-chocs.

Ainsi, les brevets japonais 6314001 et 6387223 décrivent des lentilles en verre organique comportant une couche de primaire anti-chocs à base de résine de polyuréthanne thermoplastique.

Le brevet US 5 015 523, quant à lui, préconise l'emploi de primaires anti-chocs acryliques, cependant que le brevet européen EP-0 404 111 décrit l'utilisation de primaires anti-chocs à base de polyuréthanne thermodurcissable.

Le document US 5 316 791 décrit l'utilisation d'une couche de primaire anti-chocs formée à partir d'une dispersion aqueuse de polyuréthanne appliquée directement sur une surface de substrat en verre organique. La couche de primaire anti-chocs peut être obtenue par séchage et durcissement à l'air d'une dispersion aqueuse ou latex d'un polyuréthanne pouvant éventuellement contenir une émulsion acrylique anioniquement stabilisée.

Bien que ces couches de primaire anti-chocs de l'art antérieur assurent à la fois une adhésion acceptable du revêtement dur anti-abrasion et une résistance aux chocs convenable, elles ne donnent pas entièrement satisfaction, en particulier en ce qui concerne les énergies minimales de rupture.

Il reste donc souhaitable de mettre au point de nouveaux revêtements primaires anti-chocs, présentant des performances de résistance aux chocs améliorées et en particulier des énergies moyennes et minimales de rupture améliorées.

On a maintenant trouvé qu'il était possible d'améliorer la résistance aux chocs de lentilles ophtalmiques en verre organique en utilisant pour la couche de primaire anti-chocs un agrégat de particules au moins biphasiques dont une des phases est constituée par un polymère ayant un caractère mou et une autre phase par un polymère ayant un caractère dur et ayant des températures de transition vitreuse situées dans des domaines prédéterminés.

Selon l'invention, on réalise une lentille ophtalmique ayant des caractéristiques de résistance aux chocs améliorées, qui comprend un substrat en verre organique ayant des faces principales avant et arrière, au moins une couche de primaire déposée sur au moins une des faces principales du substrat, la couche de primaire comprenant un agrégat de particules au moins biphasiques dont une première phase est constituée d'un polymère P1 à caractère mou ayant une température de transition vitreuse (Tg) inférieure à 20°C et une deuxième phase est constituée par un polymère P2 à caractère dur ayant une température de transition vitreuse (Tg) supérieure à 50°C, et au moins une couche d'une composition de revêtement anti-abrasion déposée sur la couche de primaire.

Dans la présente description et les revendications on désignera par "particules au moins biphasiques" ou "particules biphasiques" un aggrégat de particules comprenant au moins deux phases particulaires distinctes, ces deux phases particulaires étant éventuellement liées entre elles par une ou plusieurs autres phase particulaires constituant une ou des couches de liaison intermédiaires.

De préférence, les particules organiques biphasiques possèdent une structure coeur/écorce, le coeur étant de préférence constitué par le polymère P1 et l'écorce par le polymère P2.

De préférence encore, le polymère P1 se trouve sous la forme de nodules individualisés dispersés dans une matrice constituée par le polymère P2 et le polymère P1 présente une hydrophobicité supérieure à celle du polymère P2.

En général, la couche de primaire anti-chocs est un film thermoplastique hydrophobe, sans collant superficiel, constitué de 70 à 90% en poids du polymère P1 à caractère mou et de 10 à 30% en poids du polymère P2 à caractère dur.

De préférence, également, le polymère P1 a une Tg inférieure à 0°C et le polymère P2 a une Tg supérieure à 60°C.

Les polymères P1 et P2 des couches de primaire selon l'invention sont généralement constitués de :
- 90 à 100% en poids de motifs obtenus par polymérisation d'au moins un monomère choisi dans le groupe (I) constitué par les alkyl(C₁-C₈)esters de l'acide (méth)acrylique tels que le (méth)acrylate de méthyle et le (méth)acrylate de butyle, les esters vinyliques des acides carboxyliques linéaires ou ramifiés tels que l'acétate de vinyle et le stéarate de vinyle, le styrène, les alkylstyrènes tels que l'a-méthylstyrène, les haloalkylstyrènes tels que le chlorométhylstyrène, les diènes conjugués tels que le butadiène et l'isoprène, le (méth)acrylamide, l'acrylonitrile, le chlorure de vinyle, et les acides (méth)acryliques et leurs dérivés tels que les anhydrides; et
- 0 à 10% en poids de motifs obtenus par polymérisation d'au moins un monomère choisi dans le groupe (II) constitué par les esters allyliques d'acides monocarboxyliques ou dicarboxyliques α,β-insaturés tels que l'acrylate d'allyle, le méthacrylate d'allyle et le maléate de diallyle; les diènes conjugés tels que le butadiène et l'isoprène, les poly(méth)acrylates de polyol tels que le diméthacrylate d'éthylèneglycol, le diméthacrylate de 1,3-butylèneglycol, le diacrylate de 1,4-butènediol et le tétraacrylate de pentaérythritol, les polyvinyl benzènes tels que le divinyl benzène ou le trivinyl benzène, et les dérivés polyallyliques tels que le cyanurate de triallyle et le trimésate de triallyle.

Les monomères du groupe (II) agissent comme agents de réticulation dans les polymères P1 et P2.

En général, le polymère P1 à caractère mou est constitué majoritairement de motifs provenant de la polymérisation d'au moins un monomère choisi parmi l'acrylate de butyle, le butadiène et l'isoprène, cependant que le polymère P2 à caractère dur est généralement majoritairement constitué de motifs provenant de la polymérisation d'au moins un monomère choisi parmi le méthacrylate de méthyle, le styrène et le chlorure de vinyle.

Dans le cas d'une structure coeur/écorce, de préférence seul le coeur est réticulé, les monomères réticulants préférés étant le butadiène et le diacrylate de butanediol-1,4, et la teneur en monomères réticulants étant comprise entre 0 et 10% en poids, par rapport au poids total des particules.

Le polymère P2 dur peut être greffé directement sur le polymère P1 ou par l'introduction sur ce dernier de restes de motifs monomères. Ces restes de motifs monomères sont obtenus par l'incorporation dans le polymère P1 mou, de monomères greffants choisis parmi, soit les diènes conjugués, les restes de motifs monomères résultant de l'incorporation partielle en 1,2 du diène lors de la polymérisation, soit parmi les esters allyliques d'acides carboxyliques ou dicarboxyliques α,β-insaturés, qui possèdent deux fonctions copolymérisables de réactivités différentes.

Les monomères greffants préférés selon l'invention sont le butadiène, le méthacrylate d'allyle et le maléate de diallyle.

Les polymères P1 et P2 selon l'invention peuvent être préparés par polymérisation en émulsion en deux étapes, comme décrit ci-après, à partir des monomères choisis dans le groupe (I) et éventuellement le groupe (II) ci-dessus.

La sélection des monomères tant pour le polymère P1 mou que pour le polymère P2 dur, est conditionnée par des propriétés telles que l'hydrophobie, la température de transition vitreuse, que l'on souhaite conférer aux polymères en question.

La couche de primaire selon l'invention peut être en particulier obtenue à partir d'un latex contenant des particules des polymères P1 et P2, en particulier de polymères P1 et P2 hydrophobes, structurés en coeur/écorce. Lorsque la participation massique de l'écorce dans le poids total des particules de polymères n'excède pas 30%, le latex appliqué sur une surface d'un substrat en verre organique donne après séchage à basse température, et sans intervention d'agents de coalescence ni de composés organiques volatils, un film continu, structuré sous forme de nodules mous, dispersés dans une matrice dure, homogène, sans collant superficiel et ayant une bonne tenue mécanique.

De manière générale, l'hydrophobie est la non solubilité dans l'eau ou bien l'absence d'affinité vis-à-vis de l'eau. Selon l'invention, cette absence d'affinité peut être hiérarchisée. En effet, l'hydrophobie selon l'invention est définie par le paramètre de solubilité (Δ) tel que décrit dans "properties of polymers" de D.W. Van Krevelen, 1990, 3ème édition, p. 220. Ce paramètre permet de classer les différents polymères selon leurs affinités vis-à-vis de l'eau. Selon l'invention, un polymère est hydrophobe si son (Δ) est inférieur à 26. De plus, si (Δ1) d'un polymère 1 est inférieur à (Δ2) d'un polymère 2, alors 1 est plus hydrophobe que 2.

Un latex convenant pour la réalisation des couches de primaire selon l'invention est un latex ne contenant ni agents de coalescence, ni composés organiques volatils, filmifiant par évaporation à une température inférieure à 40°C et de préférence proche de 25°C, le latex étant à base de particules de polymères hydrophobes structurés en coeur/écorce, et constitués de :
- 70 à 90% en poids d'au moins un polymère P1 à caractère mou, ayant une Tg inférieure à 20°C, formant le coeur, et de
- 10 à 30% en poids d'au moins un polymère P2 à caractère dur, ayant une Tg supérieure à 50°C formant l'écorce.

De préférence, le coeur a une Tg inférieure à 0°C et l'écorce une Tg supérieure à 60°C. De plus, le coeur est généralement plus hydrophobe que l'écorce.

Les particules des latex de l'invention ont de préférence une taille de 30 à 400 nm et mieux encore de 50 à 250 nm.

Un des latex préférés de l'invention est un latex de structure coeur/écorce non réticulé à coeur et fonctionnalisé avec des fonctions (méth)acryliques (et préférentiellement méthacryliques) dans l'écorce.

Les latex de l'invention sont préparés en deux étapes, par polymérisation en émulsion d'un mélange de monomères constitué :
- de 90 à 100% en poids d'au moins un monomère choisi dans le groupe (I), et
- de 0 à 10% en poids d'au moins un monomère choisi dans le groupe (II).

De manière générale, les latex sont préparés par la polymérisation en émulsion en au moins deux étapes selon les techniques de polymérisation bien connues de l'homme du métier.

La composition du mélange de monomères à polymériser à chaque étape dépend du caractère qu'on souhaite donner aux polymères formés dans cette étape (Tg, hydrophobie).

Selon l'invention, on prépare dans une première étape le polymère P1 à caractère mou et à Tg inférieure à 20°C constituant le coeur des particules, ensuite on procède à la préparation du polymère P2 à Tg supérieure à 50°C constituant l'écorce à caractère dur.

On notera que pour que les particules soient parfaitement structurées, le mélange de monomères à polymériser pour former le coeur doit être plus hydrophobe que celui à polymériser pour former l'écorce.

Pour chaque étape, la réaction de polymérisation est préférentiellement conduite sous atmosphère inerte en présence d'amorceurs radicalaires. Le système d'amorçage utilisé peut être un système oxydo-réducteur, un système thermique ou peroxydique tel que l'hydroperoxyde de tertio-butyle/bisulfate de sodium ou le di-isopropyl benzène, les quantités utilisées étant comprises entre 0,2 et 1 % en poids par rapport à la masse totale des monomères, préférentiellement entre 0,25 et 0,5% en poids.

La réaction de polymérisation en émulsion selon l'invention est menée à une température comprise entre 25 et 150°C et est fonction de la nature du système d'amorçage utilisé.

La préparation des dispersions selon l'invention est effectuée de préférence selon un procédé de type semi-continu permettant de limiter les dérives des compositions qui sont fonction des différences de réactivité des différents monomères. L'introduction des monomères soit purs, soit sous forme d'une préémulsion avec une partie de l'eau et des tensio-actifs, est ainsi généralement réalisée sur une période de temps de 3 heures 30 à 5 heures. Il est également utile, bien que non indispensable, d'effectuer un ensemencement de 1 à 15% des monomères. Les systèmes émulsifiants utilisés dans le procédé de polymérisation en émulsion sont choisis dans la gamme des émulsifiants possédant une balance hydrophile/lipophile adaptée. Les systèmes préférés sont constitués par l'association d'un tensio-actif anionique, tel que le laurylsulfate de sodium, les nonyl phénol sulfates éthoxylés, en particulier à 20-25 moles d'oxyde d'éthylène, le benzène dodécylsulfonate et les alcools gras éthoxylés sulfates, et d'un tensio-actif non-ionique, tel que les nonylphénols éthoxylés, en particulier à 10-40 moles d'oxyde d'éthylène et les alcools gras éthoxylés.

Les substrats convenant pour les lentilles selon la présente invention, sont tous substrats en verre organique couramment utilisés pour les lentilles ophtalmiques organiques.

Parmi les substrats convenant pour les lentilles selon l'invention, on peut citer des substrats obtenus par polymérisation des méthacrylates d'alkyle, en particulier des méthacrylates d'alkyle en C₁-C₄, tels que le méthyl(méth)acrylate et l'éthyl(méth)acrylate, les dérivés allyliques tels que les allyl carbonates de polyols aliphatiques ou aromatiques, linéaires ou ramifiés, les thio(méth)acryliques, les thiouréthanes, les (méth)acrylates aromatiques polyéthoxylés tels que les bisphénolates diméthacrylates polyéthoxylés et les polycarbonates (PC). Parmi les substrats recommandés, on peut citer des substrats obtenus par polymérisation des allyl carbonates de polyols parmi lesquels on peut mentionner l'éthylèneglycol bis allyl carbonate, le diéthylène glycol bis 2-méthyl carbonate, le diéthylèneglycol bis (allyl carbonate), l'éthylèneglycol bis (2-chloro allyl carbonate), le triéthylèneglycol bis (allyl carbonate), le 1,3-propanediol bis (allyl carbonate), le propylène glycol bis (2-éthyl allyl carbonate), le 1,3-butènediol bis (allyl carbonate), le 1,4-butènediol bis (2-bromo allyl carbonate), le dipropylèneglycol bis (allyl carbonate), le triméthylèneglycol bis (2-éthyl allyl carbonate), le pentaméthylèneglycol bis (allyl carbonate), l'isopropylène bis phénol-A bis (allyl carbonate).

Les substrats particulièrement recommandés sont les substrats obtenus par polymérisation du bis allyl carbonate du diéthylèneglycol, vendus sous la dénomination commerciale CR 39^{®} par la Société PPG INDUSTRIE (lentille ORMA^{®} ESSILOR).

Parmi les substrats également recommandés, on peut citer les substrats obtenus par polymérisation des monomères thio(méth) acryliques, tels que ceux décrits dans la demande de brevet français FR-A-2 734 827.

Bien évidemment, les substrats peuvent être obtenus par polymérisation de mélanges des monomères ci-dessus.

Pour les lentilles ophtalmiques constituées de matériau en polycarbonate (PC), thermoplastique, ces lentilles étant déjà très résistantes aux chocs, les primaires selon l'invention peuvent être avantageusement utilisés comme primaires d'adhérence.

Les revêtements durs anti-abrasion des lentilles ophtalmiques selon l'invention peuvent être tous revêtements anti-abrasion connus dans le domaine de l'optique ophtalmique.

Parmi les revêtements durs anti-abrasion recommandés dans la présente invention, on peut citer les revêtements obtenus à partir de compositions à base d'hydrolysat de silane, en particulier d'hydrolysat d'époxysilane, telles que celles décrites dans la demande de brevet français n° 93 026 49 et dans le brevet US 4 211 823.

Une composition pour revêtement dur anti-abrasion préférée, comprend un hydrolysat d'époxysilane et de dialkyldialcoxysilane, de la silice colloïdale et une quantité catalytique d'acétylacétonate d'aluminium, le reste étant essentiellement constitué par des solvants classiquement utilisés pour la formulation de telles compositions.

Préférentiellement l'hydrolysat utilisé est un hydrolysat de γ-glycidoxypropyltriméthoxysilane (GLYMO) et de diméthyldiéthoxysilane (DMDES).

Comme indiqué précédemment, la lentille ophtalmique selon l'invention peut comporter en outre un revêtement anti-reflets déposé sur le revêtement anti-abrasion.

A titre d'exemple, le revêtement anti-reflets peut être constitué d'un film mono- ou multicouche, de matériau diélectrique tel que SiO, SiO₂, Si₃N₄, TiO₂, ZrO₂, Al₂O₃, MgF₂ ou Ta₂O₅, ou leurs mélanges.

Il devient ainsi possible d'empêcher l'apparition d'une réflexion à l'interface lentille-air.

Ce revêtement anti-reflets est appliqué généralement par dépôt sous vide selon l'une des techniques suivantes :
1. par évaporation, éventuellement assistée par faisceau ionique.
2. par pulvérisation par faisceau d'ion.
3. par pulvérisation cathodique.
4. par dépôt chimique en phase vapeur assistée par plasma.

Outre le dépôt sous vide, on peut aussi envisager un dépôt d'une couche minérale par voie sol/gel (par exemple à partir d'hydrolysat de tetraéthoxysilane).

Dans le cas où la pellicule comprend une seule couche, son épaisseur optique doit être égale à λ/4 (λ est une longueur d'onde comprise entre 450 et 650 nm).

Dans le cas d'un film multicouche comportant trois couches, on peut utiliser une combinaison correspondant à des épaisseurs optiques respectives λ/4, λ/2, λ/4 ou λ/4-λ/4-λ/4.

On peut en outre utiliser un film équivalent formé par plus de couches, à la place d'un nombre quelconque des couches faisant partie des trois couches précitées.

Les lentilles ophtalmiques selon l'invention peuvent être constituées d'un substrat en verre organique revêtu sur sa face arrière ou sa face avant d'une couche de primaire anti-chocs selon l'invention, d'un revêtement anti-abrasion déposé sur la couche de primaire et éventuellement d'un revêtement anti-reflets sur le revêtement antiabrasion.

Egalement, le substrat peut être revêtu sur ses deux faces d'une couche de primaire anti-chocs selon l'invention, d'un revêtement antiabrasion et éventuellement d'un revêtement anti-reflets.

Les lentilles ophtalmiques préférées selon l'invention comportent une seule couche de primaire anti-chocs déposée en face arrière de la lentille et sur chacune des faces un revêtement anti-abrasion et un revêtement anti-reflets appliqué sur le revêtement anti-abrasion.

Par exemple, on peut obtenir une lentille, selon l'invention, en déposant une couche d'une composition de latex telle que définie précédemment sur la face arrière de la lentille et laisser sécher ce latex à température ambiante ou à une température proche de la température ambiante, pour former la couche de primaire anti-chocs. On applique ensuite par trempage le revêtement dur anti-adhésion sur les deux faces de la lentille. Enfin, après durcissement de ce revêtement dur, on peut appliquer un revêtement anti-reflets sur une ou les deux faces de la lentille.

Une lentille ophtalmique ainsi obtenue présente une excellente résistance à l'abrasion sur sa face avant, la plus sollicitée lors des manipulations par l'utilisateur et une excellente résistance aux chocs.

En général, l'épaisseur de la couche de primaire anti-chocs selon l'invention est comprise entre 0,1 et 10 µm, de préférence entre 0,2 et 3,5µm et mieux entre 0,5 et 2 µm.

L'épaisseur du revêtement anti-abrasion est quant à elle généralement comprise entre 1 et 10 µm, et plus particulièrement entre 2 et 6 µm.

Les exemples suivants illustrent la présente invention.

Dans les exemples, sauf indication contraire, tous les pourcentages et parties sont exprimés en poids.

### Exemple de préparations de latex selon l'invention.

### Préparation d'un latex A

On opère dans une réacteur de 5 litres équipé d'un agitateur, d'une prise de température et d'une double enveloppe parcourue par un fluide caloporteur pour le maintien du réacteur en température.

Dans ce réacteur, maintenu à température ambiante, et sous agitation, on introduit après avoir effectué un dégazage à l'azote, 1500 g d'eau déminéralisée et 4,8 g de phosphate disodique, puis on dissout dans ce milieu 40,05 g de lauryl sulfate de sodium à titre d'agent émulsifiant.

On porte ensuite la température du contenu du réacteur à 57°C et, tout en maintenant cette température, on ajoute alors simultanément audit contenu 991,75 g d'acrylate de n-butyle et 9,2 g de diacrylate de butanediol-1,4.

On amène la température du réacteur à 66°C et on ajoute au milieu réactionnel 1,3 g de persulfate de potassium dissous dans 12,5 g d'eau et 0,925 g de bisulfite de sodium dissous dans 35 g d'eau.

Après un temps d'induction d'environ 15 minutes, la température s'élève à 107°C.

Après cet exotherme, on ajoute dans le réacteur maintenu à 80°C un mélange constitué de 98,9 g d'acrylate de n-butyle et 5,48 g de maléate de diallyle, puis 0,05 g de persulfate de potassium dissous dans 25 g d'eau. On maintient la température à 80°C pendant une heure. On obtient, avec une conversion de 97%, le noyau élastomérique constitué de particules de latex de diamètre Coulter 77 nm.

Au milieu réactionnel précédemment obtenu, maintenu à 80°C, on ajoute, sous agitation, 1 g de sulfoxylate formaldéhyde de sodium dans 5 g d'eau. On ajoute ensuite, sur une période de une heure, 279,9 g de méthacrylate de méthyle, et d'autre part 0,825 g de diisopropylbenzène hydroperoxyde dans 275 g d'eau.

Le contenu du réacteur est maintenu à 80°C pendant 1,5 heure, après le début de l'addition de méthacrylate de méthyle, et on ajoute audit contenu 0,5 g d'hydroperoxyde de tertiobutyle et 0,175 g de bisulfite de sodium dans 10 g d'eau.

Le mélange réactionnel est ensuite maintenu à 80°C pendant une heure. Au bout de cette durée, le contenu du réacteur est refroidi à température ambiante.

On obtient avec une conversion de 96,4% un latex du copolymère greffé, dont le diamètre moyen de particule est de 85 nm et l'extrait sec de 39,9%. L'analyse du polymère obtenu montre qu'il a 2 Tg, l'une située à -38°C, l'autre à 105°C.

### Préparation d'un latex B

On procède de la même manière que précédemment, sauf qu'on modifie la composition des monomères à polymériser à chaque étape de manière à modifier les Tg des copolymères préparés.

Les caractéristiques des particules du latex B sont les suivantes :

| Latex B : | |
|---|---|
| Diamètre moyen des particules : | 90 nm |
| Tg1 : | - 49°C |
| Tg2 : | 100°C |

### Préparation d'un latex ABu/MMA (70/30)

On prépare un latex d'acrylate de butyle (ABu)/Méthacrylate de méthyle (MMA) de la façon suivante:

### Préparation du pied de cuve

0,82 g de tensio-actif DISPONIL^{®} A 3065 (mélange d'alcools gras à 30 EO, 65% de matières actives) et 0,55 g de tensio-actif DISPONIL^{®} FES (C₁₂₋₁₄(OCH₂CH₂)₁₂ OSO⁻₃Na⁺) sont solubilisés dans 148,9 g d'eau. On agite le mélange pendant 10 minutes puis on l'introduit dans un réacteur à doubles parois dont le couvercle comporte 5 entrées (pour l'azote, le thermomètre, l'agitateur, la coulée de l'amorceur et la coulée de la préémulsion). Le réacteur est dégazé pendant 1 heure.

### Préparation de la solution d'amorçage

En parallèle on dissout 1,6 g de persulfate de sodium dans 12,4 g d'eau.

### Préparation d'un latex de structure coeur/écorce ABu/MMA 70/30

Le coeur du latex a été préparé dans un premier temps en coulant en 2h48 la préémulsion I, puis dans un second temps, l'écorce en coulant en 1h12 la préémulsion II.

La solution d'amorçage est introduite de façon cocomitante à l'ajout des préémulsions I et II, pendant 4 heures.

Les compositions du pied de cuve, des préémulsions I et II et de la solution d'amorçage sont indiquées dans le tableau ci-dessous:

| | Pied de cuve | Préémulsion I | Préémulsion II | Amorçage |
|---|---|---|---|---|
| Eau (g) | 148,9 | 115,4 | 49,4 | 12,4 |
| DISP.3065 (g)(2% poids/M) | 0,82 | 5,15 | 2,21 | |
| DISP.FES (g)(2% | 0,55 | 3,36 | 1,44 | |
| NaHCO₃ (g) | | 0,4 | 0,17 | |
| ABu (g) | | 185,7 | | |
| MMA (g) | | | 79,6 | |
| Persulfate de sodium (g) | | | | 1,6 |

Le produit obtenu est un latex ABu/MMA 70/30 ayant les caractéristiques suivantes:

| Extrait sec (%) | Taille des particules (nm) |
|---|---|
| 44 | 210 |

### Exemples de réalisations de lentilles avec couche de primaire selon l'invention.

On a utilisé pour former les couches de primaire anti-chocs des lentilles ophtalmiques des exemples ci-après, les latex indiqués dans le tableau ci-dessous.Le réticulant dont il est question par la suite est celui du coeur (ABu) des particules.

Dans l'exemple 4 ci-après, le MAA est contenu dans l'écorce des particules.

| **Latex** | **Composition** | **Extrait sec** |
|---|---|---|
| | | (%) |
| 1 (comparatif) | PU(PES)/Acry 60/40 | 39 |
| 2 | ABu/MMA 80/20 | 39 |
| | (réticulant BDA-0,9%) | |
| 3 | ABu/MMA 80/20 | 39 |
| | (réticulant BDA-0,3%) | |
| 4 | ABu/MMA 80/20 | 39 |
| | (réticulant BDA-0,9%) écorce (MAA-1,1%) | |
| 5 | ABu/MMA 80/20 | - |
| | Réticulant BDA-0,15% | |
| 6 | ABu/MMA 80/20 | - |
| | (sans réticulant) | |
| 7 | ABU/MMA 70/30 | 37 |
| | (sans réticulant) | |

- PU(PES) :: Latex polyuréthanne à motifs polyesters aliphatiques NEOREZ^{®} R 965 de la Société ZENECA
- Acry :: Latex A 639 (acrylique/styrène) de la Société ZENECA
- ABu :: Acrylate de butyle
- MMA :: Méthacrylate de méthyle
- BDA :: Diacrylate de butyle
- MAA :: Acide méthacrylique.

(Les latex 2 à 7 sont des latex selon l'invention).

On a revêtu la face arrière de substrats en verre organique avec une couche d'un des primaires selon l'invention et de primaires de l'art antérieur, comme indiqué dans le tableau ci-dessous.

Les caractéristiques des lentilles obtenues sont également données dans le tableau.

Les lentilles comportaient toutes également, sur la couche de primaire, une couche identique de revêtement anti-abrasion et une couche identique d'un revêtement anti-reflets.

| **Lentille n°** | **Substrat en verre** | **Couche de primaire** | |
|---|---|---|---|
| | **organique** | **Latex n°** | **Epaisseur µm** |
| 1 (comparatif) | A | 1 | 1 |
| 2 | A | 2 | 1 |
| 3 | A | 2 | 3 |
| 4 | A | 3 | 1 |
| 5 | A | 3 | 3 |
| 6 | A | 4 | 3 |
| 7 | A | 7 | 1 |
| 8 (comparatif) | B | 1 | 1 |
| 9 (comparatif) | B | 1 | 3 |
| 10 | B | 3 | 1 |
| 11 | B | 3 | 3 |
| 12 | A | 5 | 1 |
| 13 | A | 6 | 1 |

**Substrat A :** ORMA^{®} en CR 39^{®} de la Société ESSILOR.
Puissance : - 2 dioptries - Epaisseur au centre : 2 mm.

**Substrat B :** ORMEX^{®} de la Société ESSILOR.
Puissance : - 2 dioptries - Epaisseur au centre : 1,1 mm.

### Revêtement anti-abrasion :

La composition de revêtement antiabrasion est obtenue de la façon suivante:
On fait tomber goutte à goutte 80,5 parties d'acide chlorhydrique 0,1 N dans une solution contenant 224 parties de GLYMO et 120 parties en poids de DMDES.

La solution hydrolysée est agitée 24 heures à température ambiante puis on ajoute 718 parties en poids de silice colloïdale à 30 % dans le méthanol, 15 parties en poids d'acétylacétonate d' aluminium et 44 parties en poids d'éthylcellosolve.

On ajoute en fin une petite quantité d'agent tensio-actif.

La lentille revêtue du primaire en face arrière est trempée dans un bain comprenant la composition de revêtement, puis après retrait du bain, la lentille est chauffée à 90°C pendant 1 heure.

L'épaisseur du revêtement anti-abrasion , après durcissement est de 3 µm.

### Revêtement anti-reflets :

Le revêtement anti-reflets est appliqué sur les deux faces de la lentille (sur le revêtement anti-abrasion) par déposition, sous vide, des couches successives suivantes:

| | Matériau | Epaisseur optique |
|---|---|---|
| Première couche déposée: | ZrO₂ | 55nm |
| Deuxième couche déposée: | SiO₂ | 30nm |
| Troisième couche déposée: | ZrO₂ | 160nm |
| Quatrième couche déposée: (couche supérieure) | SiO₂ | 120nm |

Les épaisseurs optiques sont données pour λ = 550nm.

On a mesuré l'énergie de rupture des lentilles conformément à la norme FDA de résistance au choc de verres ophtalmiques. Cet essai consiste à laisser tomber une bille de 16 g d'une hauteur de 127 cm sur le centre de la face convexe de la lentille, représentant une énergie de 200 mJ. Le verre est conforme à la norme s'il n'est ni cassé ni étoilé.

Pour mesurer l'énergie de rupture des lentilles ophtalmiques, on fait tomber des billes d'énergie croissante au centre des lentilles jusqu'à étoilement ou la cassure de celle-ci. On calcule ensuite l'énergie de rupture de la lentille.

On a pour chaque lentille effectué ces essais sur une série de 20 lentilles et déterminé ainsi une énergie de rupture moyenne ainsi que l'énergie de rupture minimale correspondant à l'énergie la plus faible, provoquant l'étoilement ou la rupture d'une des lentilles de la série.

Cette dernière donnée est importante, car pour satisfaire à l'essai FDA, toutes les lentilles d'une série doivent présenter une énergie minimale de rupture d'au moins 200 mJ.

Les résultats sont donnés dans le tableau ci-dessous.

| **Lentille n°** | **Energie moyenne de rupture mJ** | **Energie minimale de rupture mJ** | **Ecart type** |
|---|---|---|---|
| Substrat A nu | 1800 | 450 | 600 |
| Substrat B nu | 800 | 100 | - |
| Substrat A revêtu uniquement de la couche anti-abrasion | 560 | 300 | 140 |
| Substrat A revêtu de la couche anti-abrasion et de la couche anti-reflets | 180 | 160 | 15 |
| Substrat B revêtu uniquement de la couche anti-abrasion | 230 | 130 | 35 |
| Substrat B revêtu de la couche anti-abrasion et de la couche anti-reflets | 200 | - | - |
| 1 (comparatif) | 555 | - | 115 |
| 2 | 1270 | 810 | 345 |
| 3 | 1550 | 1100 | 280 |
| 4 | 1520 | 1065 | 260 |
| 5 | 1720 | 1380 | 280 |
| 6 | 1560 | 1210 | 220 |
| 7 | 1450 | 835 | 445 |
| 8 (comparatif) | 350 | 168 | 138 |
| 9 (comparatif) | 2140 | 169 | 1100 |
| 10 | 1210 | 470 | 650 |
| 11 | 1745 | 330 | 715 |
| 12 | 2052 | 632 | 984 |
| 13 | 2470 | 1120 | 832 |

Les résultats montrent que :
1/ la présence des revêtements anti-abrasion et anti-reflets diminue considérablement la résistance au choc des substrats en verre organique;
2/ l'utilisation d'une couche de primaire anti-choc selon l'invention améliore notablement la résistance au choc comparée à un primaire anti-choc PU(PES)/Acry de l'art antérieur.

En particulier, dans les lentilles selon l'invention, non seulement l'énergie moyenne est assurée, mais l'énergie minimale est toujours largement supérieure aux 200 mJ, ce qui n'est pas le cas pour les lentilles comportant une couche de primaire PU(PES)/Acry.

En outre, la dispersion des résultats est également plus faible.

Enfin, on observe que les performances aux chocs croîssent lorsque la réticulation du coeur diminue.

## Revendications

1. Lentille ophtalmique comprenant un substrat en verre organique ayant des faces principales avant et arrière, au moins une couche de primaire déposée sur au moins une des faces principales du substrat, ladite couche de primaire comprenant un agrégat de particules au moins biphasiques dont une première phase est constituée d'un polymère P1 à caractère mou ayant une température de transition vitreuse (Tg) inférieure à 20°C et une deuxième phase est constituée par un polymère P2 à caractère dur ayant une température de transition vitreuse (Tg) supérieure à 50°C, et au moins une couche d'une composition de revêtement anti-abrasion déposée sur la couche de primaire.

2. Lentille ophtalmique selon la revendication 1, **caractérisée en ce que** les particules organiques biphasiques possèdent une structure coeur/écorce.

3. Lentille ophtalmique selon la revendication 2, **caractérisée en ce que** le coeur est constitué par le polymère P1 et l'écorce par le polymère P2.

4. Lentille ophtalmique selon l'une quelconque des revendications précédentes, **caractérisée en ce que** le polymère P1 représente 70 à 90% en poids de la couche de primaire et le polymère P2 représente 10 à 30% en poids de la couche de primaire.

5. Lentille ophtalmique selon l'une quelconque des revendications précédentes, **caractérisée en ce que** le polymère P1 est dispersé sous la forme de nodules dans une matrice constituée par le polymère P2.

6. Lentille ophtalmique selon l'une quelconque des revendications précédentes, **caractérisée en ce que** le polymère P1 présente une hydrophobicité supérieure à celle du polymère P2.

7. Lentille ophtalmique selon l'une quelconque des revendications précédentes, **caractérisée en ce que** les polymères P1 et P2 sont constitués de :
- 90 à 100% en poids de motifs obtenus par polymérisation d'au moins un monomère choisi dans le groupe (I) constitué par les alkyl(C₁-C₈)esters de l'acide (méth)acrylique, les esters vinyliques des acides carboxyliques linéaires ou ramifiés, le styrène, les alkylstyrènes, les haloalkylstyrènes, les diènes conjugués, le (méth)acrylamide, l'acrylonitrile, le chlorure de vinyle, les acides (méth)acryliques et leurs dérivés; et
- 0 à 10% en poids de motifs obtenus par polymérisation d'au moins un monomère choisi dans le groupe (II) constitué par les esters allyliques d'acides monocarboxyliques ou dicarboxyliques α,β-insaturés, les diènes conjugués, les poly(méth)acrylates de polyols, les polyvinylbenzènes et les dérivés polyallyliques.

8. Lentille ophtalmique selon la revendication 7, **caractérisée en ce que** :
- pour le polymère P1, les monomères sont choisis, pour les monomères du groupe (I), parmi l'acrylate d'éthyle, l'acrylate de butyle, le butadiène, le méthacrylate de butyle et le méthacrylate de méthyle, pour les monomères du groupe (II), parmi le diacrylate de butènediol-1,4, le butadiène, le diacrylate d'éthylèneglycol, le maléate de diallyle et le méthacrylate d'allyle; et
- pour le polymère P2, les monomères sont choisis exclusivement parmi les monomères du groupe (I), comprenant le méthacrylate de méthyle, le méthacrylate de butyle et l'acide méthacrylique.

9. Lentille ophtalmique selon l'une quelconque des revendications précédentes, **caractérisée en ce que** le polymère P1 a une Tg inférieure à 0°C et le polymère P2 une Tg supérieure à 60°C.

10. Lentille ophtalmique selon l'une quelconque des revendications précédentes, **caractérisée en ce qu'**elle comprend une seule couche de primaire sur la face principale arrière du substrat.

11. Lentille ophtalmique selon l'une quelconque des revendications 1 à 9, **caractérisée en ce qu'**elle comprend une couche de primaire sur chacune des faces principales du substrat.

12. Lentille ophtalmique selon l'une quelconque des revendications précédentes, **caractérisée en ce qu'**elle comprend un revêtement anti-reflets déposé sur le revêtement anti-abrasion.

13. Lentille ophtalmique selon l'une quelconque des revendications précédentes, **caractérisée en ce que** le revêtement anti-abrasion est un revêtement de polysiloxane.

14. Lentille ophtalmique selon la revendication 13, **caractérisée en ce que** le polysiloxane est obtenu par durcissement d'un hydrolysat de silanes contenant un époxysilane.

15. Lentille ophtalmique selon la revendication 14, **caractérisée en ce que** l'hydrolysat contient des particules de silice.

16. Lentille ophtalmique selon l'une quelconque des revendications précédentes, **caractérisée en ce que** ladite couche de primaire est un film thermoplastique hydrophobe, n'ayant pas de collant superficiel, constitué de 70 à 90 % en poids du polymère P1 dispersé dans 10 à 30 % en poids du polymère P2.

17. Lentille ophtalmique selon l'une quelconque des revendications précédentes, **caractérisée en ce que** le polymère P1 se trouve sous la forme de nodules individualisés dispersés dans la matrice constituée par le polymère P2.

## Patentansprüche

1. Ophthalmische Linse, umfassend ein Substrat aus organischem Glas mit einer vorderen und einer hinteren Hauptfläche; mindestens einer auf mindestens eine der Hauptflächen des Substrats aufgebrachten Grundierungsschicht, wobei die Grundierungsschicht ein Aggregat von zumindest zweiphasigen Partikeln umfasst, von denen eine erste Phase aus einem Polymer P1 mit weichem Charakter besteht, das eine Glasübergangstemperatur (Tg) von weniger als 20°C besitzt, und eine zweite Phase aus einem Polymer P2 mit hartem Charakter besteht, das eine Glasübergangstemperatur (Tg) von über 50°C besitzt, und mindestens einer Schicht aus einer abriebfesten Beschichtungszusammensetzung, die auf die Grundierungsschicht aufgebracht ist.

2. Ophthalmische Linse nach Anspruch 1, **dadurch gekennzeichnet, dass** die zweiphasigen organischen Partikel eine Kern/Schale-Struktur besitzen.

3. Ophthalmische Linse nach Anspruch 2, **dadurch gekennzeichnet, dass** der Kern aus dem Polymer P1 und die Schale aus dem Polymer P2 besteht.

4. Ophthalmische Linse nach einem der vorhergehenden Ansprüche, **dadurch gekennzeichnet, dass** das Polymer P1 70 bis 90 Gew.-% der Grundierungsschicht ausmacht und das Polymer P2 10 bis 30 Gew.-% der Grundierungsschicht ausmacht.

5. Ophthalmische Linse nach einem der vorhergehenden Ansprüche, **dadurch gekennzeichnet, dass** das Polymer P1 in Form von Knötchen in einer aus dem Polymer P2 bestehenden Matrix dispergiert ist.

6. Ophthalmische Linse nach einem der vorhergehenden Ansprüche, **dadurch gekennzeichnet, dass** das Polymer P1 eine größere Hydrophobie als das Polymer P2 aufweist.

7. Ophthalmische Linse nach einem der vorhergehenden Ansprüche, **dadurch gekennzeichnet, dass** die Polymere P1 und P2 aus Folgendem bestehen:
- 90 bis 100 Gew.-% Einheiten, die durch Polymerisation von mindestens einem Monomer, ausgewählt aus der Gruppe (I), bestehend aus (Meth)Acrylsäure(C1-C8)alkylestern, Vinylestern von geraden oder verzweigten Carbonsäuren, Styrol, Alkylstyrolen, Halogenalkylstyrolen, konjugierten Dienen, (Meth)Acrylamid, Acrylnitril, Vinylchlorid, (Meth)Acrylsäuren und ihren Derivaten, erhalten werden; und
- 0 bis 10 Gew.-% Einheiten, die durch Polymerisation von mindestens einem Monomer, ausgewählt aus der Gruppe (II), bestehend aus Allylestern von α,β-ungesättigten Mono- oder Dicarbonsäuren, konjugierten Dienen, Polyolpoly(meth)acrylaten, Polyvinylbenzolen und Polyallylderivaten, erhalten werden.

8. Ophthalmische Linse nach Anspruch 7, **dadurch gekennzeichnet, dass**:
- für das Polymer P1 die Monomere hinsichtlich der Monomere der Gruppe (I) aus Ethylacrylat, Butylacrylat, Butadien, Butylmethacrylat und Methylmethacrylat ausgewählt sind, hinsichtlich der Monomere der Gruppe (II) aus 1,4-Butendioldiacrylat, Butadien, Ethylenglykoldiacrylat, Diallylmaleat und Allylmethacrylat ausgewählt sind; und
- für das Polymer P2 die Monomere ausschließlich aus den Monomeren der Gruppe (I), umfassend Methylmethacrylat, Butylmethacrylat und Methacrylsäure, ausgewählt sind.

9. Ophthalmische Linse nach einem der vorhergehenden Ansprüche, **dadurch gekennzeichnet, dass** das Polymer P1 eine Tg von weniger als 0°C und das Polymer P2 eine Tg über 60°C besitzt.

10. Ophthalmische Linse nach einem der vorhergehenden Ansprüche, **dadurch gekennzeichnet, dass** sie eine einzige Grundierungsschicht auf der hinteren Hauptfläche des Substrats umfasst.

11. Ophthalmische Linse nach einem der Ansprüche 1 bis 9, **dadurch gekennzeichnet, dass** sie eine Grundierungsschicht auf jeder der Hauptflächen des Substrats umfasst.

12. Ophthalmische Linse nach einem der vorhergehenden Ansprüche, **dadurch gekennzeichnet, dass** sie eine Antireflexionsbeschichtung umfasst, die auf die abriebfeste Beschichtung aufgebracht ist.

13. Ophthalmische Linse nach einem der vorhergehenden Ansprüche, **dadurch gekennzeichnet, dass** es sich bei der abriebfesten Beschichtung um eine Polysiloxan-Beschichtung handelt.

14. Ophthalmische Linse nach Anspruch 13, **dadurch gekennzeichnet, dass** das Polysiloxan durch Härten eines Hydrolysats von Silanen, das ein Epoxysilan enthält, erhalten wird.

15. Ophthalmische Linse nach Anspruch 14, **dadurch gekennzeichnet, dass** das Hydrolysat SiliziumdioxidPartikel enthält.

16. Ophthalmische Linse einem der vorhergehenden Ansprüche, **dadurch gekennzeichnet, dass** es sich bei der Grundierungsschicht um einen hydrophoben, thermoplastischen Film ohne Oberflächenklebrigkeit handelt, der zu 70 bis 90 Gew.-% aus dem Polymer P1, dispergiert in 10 bis 30 Gew.-% des Polymers P2, besteht.

17. Ophthalmische Linse nach einem der vorhergehenden Ansprüche, **dadurch gekennzeichnet, dass** das Polymer P1 in Form vereinzelter Knötchen, dispergiert in der aus dem Polymer P2 bestehenden Matrix, vorliegt.

## Claims

1. Ophthalmic lens comprising a substrate made of organic glass, having front and rear main faces, at least one primer layer deposited on at least one of the main faces of the substrate, the said primer layer comprising an aggregate of at least two-phase particles, a first phase of which consists of a polymer P1 with a soft character having a glass transition temperature (Tg) of less than 20°C and a second phase of which consists of a polymer P2 with a hard character having a glass transition temperature (Tg) of greater than 50°C, and at least one layer of an abrasion-resistant coating composition deposited on the primer layer.

2. Ophthalmic lens according to Claim 1, **characterized in that** the two-phase organic particles have a core/shell structure.

3. Ophthalmic lens according to Claim 2, **characterized in that** the core consists of polymer P1 and the shell of polymer P2.

4. Ophthalmic lens according to any one of the preceding claims, **characterized in that** polymer P1 represents 70 to 90% by weight of the primer layer and polymer P2 represents 10 to 30% by weight of the primer layer.

5. Ophthalmic lens according to any one of the preceding claims, **characterized in that** polymer P1 is dispersed in the form of nodules in a matrix consisting of polymer P2.

6. Ophthalmic lens according to any one of the preceding claims, **characterized in that** polymer P1 has a greater hydrophobicity than polymer P2.

7. Ophthalmic lens according to any one of the preceding claims, **characterized in that** polymers P1 and P2 consist of:
- 90 to 100% by weight of units obtained by the polymerization of at least one monomer chosen from group (I) consisting of (C1-C8) alkyl esters of (meth)acrylic acid, vinyl esters of linear or branched carboxylic acids, styrene, alkylstyrenes, haloalkylstyrenes, conjugated dienes, (meth)acrylamide, acrylonitrile, vinyl chloride, (meth)acrylic acids and their derivatives; and
- 0 to 10% by weight of units obtained by the polymerization of at least one monomer chosen from group (II) consisting of allyl esters of unsaturated a,p-dicarboxylic or monocarboxylic acids, conjugated dienes, polyol poly(meth)acrylates, polyvinyl benzenes and polyallyl derivatives.

8. Ophthalmic lens according to Claim 7, **characterized in that**:
- for polymer P1 the monomers are chosen, in the case of the monomers of group (I), from ethyl acrylate, butyl acrylate, butadiene, butyl methacrylate and methyl methacrylate and, in the case of the monomers of group (II), from 1,4-butenedioldiacrylate, butadiene, ethylene glycol diacrylate, diallyl maleate and allyl methacrylate; and - for polymer P2, the monomers are chosen exclusively from the monomers of group (I), comprising methyl methacrylate, butyl methacrylate and methacrylic acid.

9. Ophthalmic lens according to any one of the preceding claims, **characterized in that** polymer P1 has a Tg of less than 0°C and polymer P2 has a Tg of greater than 60°C.

10. Ophthalmic lens according to any one of the preceding claims, **characterized in that** it comprises a single primer layer on the rear main face of the substrate.

11. Ophthalmic lens according to any one of Claims 1 to 9, **characterized in that** it comprises a primer layer on each of the main faces of the substrate.

12. Ophthalmic lens according to any one of the preceding claims, **characterized in that** it comprises an anti-reflection coating deposited on the abrasion-resistant coating.

13. Ophthalmic lens according to any one of the preceding claims, **characterized in that** the abrasion-resistant coating is a polysiloxane coating.

14. Ophthalmic lens according to Claim 13, **characterized in that** the polysiloxane is obtained by curing a hydrolysate of silanes containing an epoxysilane.

15. Ophthalmic lens according to Claim 14, **characterized in that** the hydrolysate contains silica particles.

16. Ophthalmic lens comprising a substrate made of organic glass, having front and rear main faces, at least one primer layer deposited on at least one of the main faces of the substrate, and at least one layer of an abrasion-resistant coating composition deposited on the primer layer, the said primer layer consisting of a hydrophobic thermoplastic film having no surface tack, consisting of 70 to 90% by weight of a polymer P1 with a soft character having a glass transition temperature (Tg) of less than 20°C dispersed in 10 to 30% by weight of a polymer P2 with a hard character having a glass transition temperature (Tg) of greater than 50°C, and said polymer P1 is dispersed in the form of individualized nodules in the matrix consisting of polymer P2.

17. Ophthalmic lens according to Claim 1, **characterized in that** polymer P1 is more hydrophobic than polymer P2.
